# EUROPEAN PATENT SPECIFICATION

(11) **EP 4 328 752 B1**
(45) Date of publication and mention of the grant of the patent: **11.11.2026**
(21) Application number: 22306270.4
(22) Date of filing: 27.08.2022
(51) Int. Cl.: G06F 11/20, H04L 41/0668, G06F 11/30, G06F 11/34

(54) **METHOD, DEVICE AND COMPUTER PROGRAM FOR COLLECTING LOGS IN AN EDGE-NETWORK**
VERFAHREN, VORRICHTUNG UND COMPUTERPROGRAMM ZUM SAMMELN VON PROTOKOLLEN IN EINEM EDGE-NETZWERK
PROCÉDÉ, DISPOSITIF ET PROGRAMME INFORMATIQUE POUR COLLECTER DES JOURNAUX DANS UN RÉSEAU PÉRIPHÉRIQUE

(43) Date of publication of application: 28.02.2024
(73) Proprietor: BULL SAS, 78340 Les Clayes-Sous-Bois (FR)
(72) Inventor: VASUDEVAN, Vinod, FAIRFAX, VA 22033 (US); RAMAN, Ravi, PIN 560080 BANGALORE (IN)
(74) Representative: IPAZ

(56) References cited:
- EP-A1- 3 140 734
- EP-B1- 3 140 734
- JAVED ASAD ET AL: "IoTEF: A Federated Edge-Cloud Architecture for Fault-Tolerant IoT Applications", JOURNAL OF GRID COMPUTING, SPRINGER NETHERLANDS, DORDRECHT, vol. 18, no. 1, 10 January 2020 (2020-01-10), pages 57 - 80, XP037079353, ISSN: 1570-7873, [retrieved on 20200110], DOI: 10.1007/S10723-019-09498-8

## Description

### Field of the invention

The present invention relates to a device for collecting logs in an edge-network. The invention also relates to a method for collecting logs in an edge-network, and a computer program for carrying out such a method. The invention also relates to an edge-network implementing such as device, a method or a computer program.

The field of the invention is the field of collecting logs in edge networks, or in other words the field of edge-based log collection solutions, especially for cybersecurity purposes.

### Background

In the cybersecurity landscape, there is a need to collect and process logs from log sources, also called security devices, to determine security issues in the networks, such as company networks. In a SaaS model, the collection of logs from different log sources is done by a log collector arranged in the network concerned by the logs: such a log collector is also called an edge-based log collector. This log collector collects/receives the logs from log sources of the network, such as firewalls in said network, end-point protection systems (EPP), proxies, etc. The edge based log collectors compress the logs, encrypt and send them to the cloud system where it is uncompressed, unencrypted to process the logs for detection of attacks in the network, and more generally for cybersecurity concerns. Hence, such log sources have to be resilient. Plus the log collector has to process high volume of logs without dropping any log. In practice, such log processing systems have main issues.

First, when the edge-based log collector implemented in the network is down, no log flow can be achieved. Thus, with the current log collectors it is not possible to achieve an uninterrupted log flow from the log sources to the cloud system.

Second, it may happen that the edge-based log collector is reconfigured, for example said log collector is down, or in case of maintenance, or even in case of reconfiguration of the network. With the current solutions, it is mandatory to reconfigure all the log sources in the network so that said log sources send the logs to said new log collector. Such a reconfiguration is cumbersome and time consuming, and prevents continuous log flow towards the cloud system.

Moreover, current log collectors are not able to process high volumes of logs. The current techniques use load balancers, or routing servers, placed upstream the log collector. This technique, in addition to not being an efficient solution for high volume log processing, creates a bottleneck for log flow.

NPL document "loTEF: A Federated Edge-Cloud Architecture for Fault-Tolerant loT Applications" by JAVED ASAD ET AL, JOURNAL OF GRID COMPUTING, SPRINGER NETHERLANDS, DORDRECHT, vol. 18, no. 1, 10 January 2020 discloses an edge-based stream processing system which uses Apache Kafka to have a failover between nodes and distribute traffic among nodes in a cluster.

A purpose of the present invention is to overcome at least one of these drawbacks.

Another purpose of the present invention is to provide a more efficient solution for edge-based log collection, regarding at least one of the drawbacks mentioned above.

Another purpose of the present invention is to provide a solution for edge-based log collection that allows a less cumbersome and time consuming modification of the log collector implemented in the network.

Another purpose of the present invention is to provide a more robust solution for edge-based log collection that ensures an improved availability for log flow.

Another purpose of the present invention is to provide a solution for edge-based log collection capable of efficiently processing high volumes of logs.

### Summary of the invention

The invention makes it possible to achieve at least one of these aims by an edge-based log collecting device for collecting logs from several log sources located in a remote network, called edge-network, and sending said logs to a cloud-based system distant from said edge-network, said device being located in said edge-network, said device comprising:
- at least one interface for receiving logs from said log sources,
- at least one interface for sending logs to said distant system, and
- several processing nodes for processing the received logs and sending them to said system;
said device is, and more particularly said processing nodes are, configured to elect, according to a predetermined election algorithm, one of said processing nodes as a master node configured for:
- receiving the logs from all log sources of the local network, and
- sharing said logs with the other processing nodes.

The present invention thus proposes a log collecting device for collecting logs in an edge-network, located in said edge-network. The log collecting device collects logs from the log sources located in said edge-network. Moreover, the device according to the invention comprises several processing nodes for processing the logs collected, or received, from log sources. Thus the device according to the invention is capable of efficiently processing high volumes of logs.

Moreover, the device, and more particularly the processing nodes, is/are configured to elect one of the processing nodes as a master node that receives the logs from the log sources of the edge-network. Thus it is possible to elect any one of the processing nodes as the master node, at the start of the device, and any time during use of the device according to the invention. Thus, the invention according to the invention allows a better availability for log flow. Indeed, the invention makes it possible to elect a new master node, when the current master node is down or unavailable, to ensure improved, and mode particularly continuous, log flow from the log sources towards the cloud system.

Furthermore, since the master node may be changed easily and the device according to the invention comprises several processing nodes, each of which may be elected as the master node, the invention proposes a more efficient solution for edge-based log collection.

According to some embodiments, at least one, and in particular each, processing node may be configured to compress the logs, and/or encrypt and/or send it to the cloud system.

Of course, at least one, and in particular each, processing node may be configured to carry out another function, or processing, as those mentioned above.

According to some embodiments, at least two, and in particular all, of the processing nodes may carry out log processing in parallel, simultaneously or one after the other.

According to some embodiments, at least one, and in particular each, of the processing nodes may be a physical machine or a virtual machine.

For example, at least one, and in particular each, of the processing nodes may be a computer, a processor, a chip, a gateway, etc.

In some embodiments, the processing nodes may be configured to switch the master node according to the election algorithm.

Thus, the master node may be changed any time, for example during use of the device.

The switch of the master node may comprise an election of another processing node as the new master node. The current master node may then become a processing node, if said node is still available.

The switch of the master node may be done upon request, or when the current master node is down or unavailable, or at a given frequency.

In some embodiments, the processing nodes may be configured to elect one of the processing nodes as the master node at the start of the device. In this case, when the device is started a master node is elected before the logs are collected and processed by the device according to the invention.

Alternatively, at the start of the device, the master node may be selected in a different manner, for example by an operator or by a configuration data, or randomly among the processing nodes.

According to some embodiments, when the current master node is unavailable or is down, the processing nodes may be configured to elect one of the remaining available processing nodes as the master node, according to the election algorithm.

Thus, the device according to the invention ensures high availability and continuous log flow from the log sources to the could system.

In some embodiments, the device according to the invention may comprise an odd number of processing nodes equal to, or greater than, three.

Such an odd, or uneven, number of nodes makes it easier to elect the master node.

According to some embodiments, a new master node may be elected among the remaining available nodes, if the number of the remaining available processing nodes is greater than, or equal to, a predefined threshold.

The threshold thus defines a minimum number of available processing nodes, in order to elect a new master node. If the number of remaining available processing nodes is smaller than the threshold, the device may be stopped and no new master node may be elected.

The threshold, also called quorum, and noted Q, may be established based on a strict majority of the processing nodes in the device according to the invention, at the start of said device. When the number of the processing nodes of the device is N, for example an odd number greater or equal to 3, the quorum Q may be Q= N/2+1. For example, if N=3, the quorum is equal to 2 and if N=5, the quorum is equal to 3.

According to some embodiments, the election algorithm may be any type of election algorithm.

For example, the election algorithm may be a random voting algorithm in which each available processing node votes for another available processing node, except itself.

According to particularly advantageous embodiments, a floating public IP address may be associated to the master node so that when a processing node is elected as the master node said public IP address is assigned to said processing node.

Thus, the public IP address remains unchanged for the log sources even when the master node is changed/switched in the device according to the invention. More particularly, the public floating IP address is bound to the master node at the start of the device. When the master node is switched from one of the processing node to another one of the processing node, the floating IP address is assigned and associated to said new processing node that becomes the master node. The log sources continue sending the logs to the same floating public IP address. The logs are received by the device and always routed to the processing node acting as the master node, regardless the processing node that is currently the master node.

In other words, the change of the master node is totally transparent for the log sources. There is no need to change the IP address of the master node at the level of each log source. Thus the invention proposes a solution for edge-based log collection that allows a less cumbersome and time consuming modification regarding the log collector implemented in the network.

The assignment of the floating public IP address from one of the processing node to another processing node may be done with appropriate infrastructure APIs.

According to particularly advantageous embodiments of the invention, the processing nodes, including the master node, may be organized as a cluster in which a private IP address is assigned to each of said processing node, said private IP addresses being used by said processing nodes to communicate with each other, and in particular for processing load balancing.

Thus, the master node receives the logs from the log sources, for example through the public floating IP address. When the logs are received, they may be distributed among the processing nodes of the device, through the private IP addresses associated to said processing nodes, organised as a cluster. Thus, the invention proposes a solution for edge-based log collection capable of efficiently processing high volumes of logs, since the processing loads may be balanced between several processing nodes, in an efficient manner.

For example, a load balancing agent, such as Apache Nifi technology agent, may be used in the device according to the invention, and more particularly in each processing node, in order to implement load balancing. This ensures that there will be no need to run a separate front end load balancer, thus reducing costs and added complexity associated to such a front-end component itself.

According to another aspect of the same invention, it is proposed a method for collecting logs from several log sources located in a remote network, called edge-network, and sending said logs to a cloud-based system distant from said edge-network, with a log collecting device located in said edge-network, said device comprising:
- at least one interface for receiving logs from said log sources,
- at least one interface for sending logs to said distant system, and
- several processing nodes for processing the received logs and sending them to said system;
said method comprising a step of electing, according to an election algorithm, one of said processing nodes as a master node configured for:
- receiving the logs from said log sources, and
- sharing said logs with the other processing nodes.

In addition to the features recited here, the method according to the invention may comprise at least one, or a combination of at least two, of the optional features recited above in connection with the device according to the invention. The method according to the invention provides the same advantages/benefits, and responds to the same drawbacks, as those mentioned above for the device according to the invention.

In some embodiments, the method according to the invention may further comprise at least one iteration of a step for switching the master node from one of the processing nodes to another one of the processing nodes.

In this case, a new processing node may be elected as the new master node, for example according to the election algorithm. The processing node that is the current master node will no longer be the master node and will be used as a processing node, if it is still available.

The switching step may be carried any time during use of the device.

The switching step may be carried out upon request.

The switching step may be carried out at a given frequency.

In some embodiments, the switching step may be carried out when the current master node is unavailable, or down, the new master node being elected among the remaining available processing nodes.

Thus, the method according to the invention allows continuous log collection and continuous log flow, even when the current master node is down.

In some embodiments, a floating public IP address may be associated to the master node and used by the log sources to communicate with said master node. In these embodiments, when a processing node is elected as master node the method according to the invention may comprise a step for assigning said floating public IP address to said processing node.

Thus, there is no need to change the address to which the log sources send the logs when the master node is changed, as explained above in connection with the device according to the invention.

According to some embodiments, the processing nodes, including the master node, may be organized as a cluster.

In this case, the method may comprise a step for assigning a private IP address to each of said processing node, said private IP addresses being used by said processing nodes to communicate with each other.

According to another aspect of the same invention, it is proposed a computer program comprising instructions, which when executed by a computer, cause the computer to carry out the steps of the method according to the invention.

The computer program may be in any programming language such as C, C++, JAVA, Python, etc.

The computer program may be in machine language.

The computer program may be stored, in a non-transient memory, such as a USB stick, a flash memory, a hard-disk, a processor, a programmable electronic chop, etc.

The computer program may be stored in a computerized device such as a Smartphone, a tablet, a computer, a server, etc.

According to another aspect of the same invention, it is proposed an edge-network comprising several log sources, said network also comprising:
- a device according to the invention, or
- means configured for carrying out the steps of the method according to the invention;
for collecting logs from said log sources.

In other terms, the invention also concerns an edge-network implementing the device, the method and/or the computer program according to the invention.

The edge-network according may be any kind of edge-network, such as a company network for example.

### Description of the figures and embodiments

Other advantages and characteristics will become apparent on examination of the detailed description of an embodiment which is in no way limitative, and the attached figures, where:
- FIGURE 1 is a diagrammatic representation of a non-limitative example of an edge-network according to the invention;
- FIGURES 2 and 3 are diagrammatic representations of a non-limitative example of a device according to the present invention; and
- FIGURE 4 is a diagrammatic representation of a non-limitative example of a method according to the present invention.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the FIGURES, elements common to several figures retain the same reference.

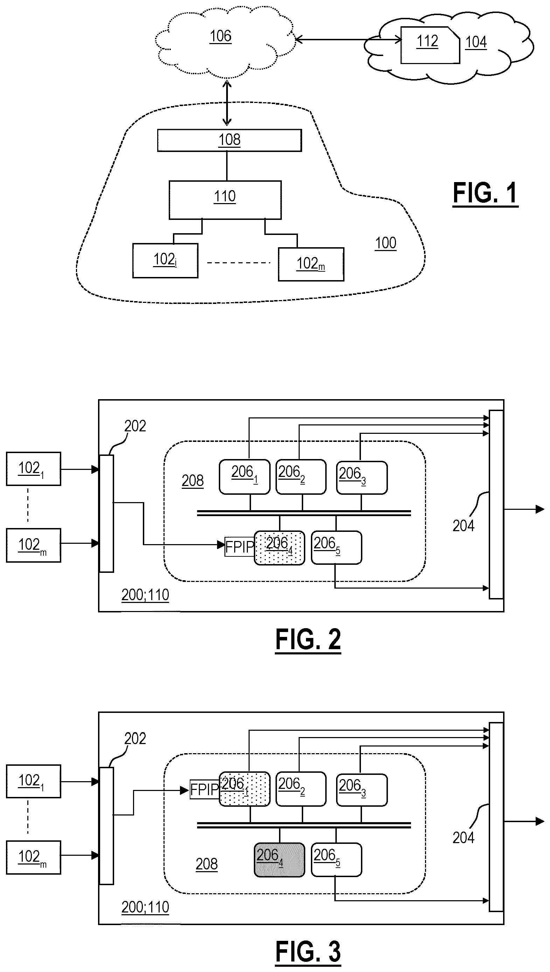

FIGURE 1 is a diagrammatic representation of a non-limitative example of an edge-network according to the present invention.

The edge-network 100, also called the network 100 in the following, shown in FIGURE 1, may be any kind of edge-network. The network 100 may be a company network, for example.

The network 100 may be a local network, or a network distributed among several locations/sites.

The network 100 comprises several log sources. In the example shown in FIGURE 1, the network comprises M log sources 102₁-102ₘ, located in said network 100. The log sources may be designated with the references 102ᵢ or 102 in the following.

The network 100 is connected to the cloud 104, for example through a communication network 106, such as for example the Internet. In this regard, the network comprises a gateway 108 that connects the network 100 to the Internet 106.

The network 100 also comprises a device according to the invention 110, for collecting the logs from the log sources and sending the same to a system 112 located in the cloud 104. An example of a device 110 will be described in the following with reference to FIGURE 2.

The log sources 102 may be devices such as firewalls, end-point protection systems (EPP), proxies, etc.

Of course, the network 100 comprises other components such as servers, user devices, etc. that are not shown in FIGURE 1.

FIGURES 2 and 3 are diagrammatic representations of a non-limitative example of a device according to the present invention for collecting logs.

The device 200, shown in FIGURES 2 and 3, may be used in any edge-network, and especially in the edge-network 100 of FIGURE 1.

The device 200 may be the log collecting device 110 of FIGURE 1.

The device 200 comprises at least one communication interface 202 for receiving the logs from the log sources 102ᵢ.

The device 200 comprises at least one communication interface 204 for sending the logs to the cloud system 114, through the gateway 108 (not represented in FIGURES 2 and 3).

The device 200 comprises several processing nodes, for example N processing nodes. In the example shown in FIGURES 2 and 3, N=5. The processing nodes, PN, 206₁-206₅ may be designated with the references 206ᵢ or 206 in the following.

The PN 206₁-206₅ are organised as a cluster 208. Moreover, each processing node 206ᵢ is assigned a private IP address. Thus, the processing nodes 206₁-206₅ may communicate with each other in the cluster 208 so that log processing load may be balanced between the PN 206₁-206₅ very efficiently and transparently.

Each PN 206ᵢ may comprise a load balancing agent, such as an Apache Nifi agent, to balance load between the PN 206₁-206₅, thus avoiding use of an additional component in the device 200 for load balancing between the nodes 206₁-206₅.

According to a very advantageous feature, the PNs 206₁-206₅ are configured to elect one of the PNs 206₁-206₅, as the master node. To do so, each PN 206ᵢ comprises an electing agent in order to vote for one of the other PNs, according to an election algorithm.

The election algorithm may be any type of election algorithm. For example, the election algorithm may be a random voting algorithm in which each available processing node votes for another available processing node, except itself.

The election of the master node may be carried at the start of the device.

The election of the master node may also be carried out each time the current master node is down or unavailable.

According to some embodiments, a master node may be elected among the remaining available nodes, if the number of the remaining available processing nodes is greater than, or equal to, a predefined threshold, also called quorum, Q.

In a non-limitative example, the quorum may be established based on a strict majority of the processing nodes in the device 200. In this case, Q=3 in the example shown in FIGURES 2-3.

Thus, one of the PN 206₁-206₅ is chosen as the master node.

The master node is configured to:
- receive the logs from all log sources 102₁-102ₘ, and
- share said logs with the other processing nodes PN 206ᵢ, in order to balance load for example by using the Apache Nifi agent and the private IP addresses of the PNs 206ᵢ.

According to an advantageous feature, a floating public IP address, referenced FPIP, is associated to the master node so that when a processing node is elected as the master node said floating public IP address is assigned to said processing node. This floating public IP address is the one already assigned to the log sources 102₁-102ₘ, hence there will be no need to communicate it to the log sources 102₁-102ₘ when the processing node is elected as the master node.

The floating public IP address FPIP remains unchanged when the master node is changed/switched in the device 200. In other words, the public floating IP address FPIP is bound to the master node at the start of the device. When the master node is switched from one of the processing nodes 206ᵢ to another one of the processing nodes 206ᵢ, the floating IP address is assigned and associated to said new processing node that becomes the master node. The log sources 102 continue sending the logs to said floating public IP address. The logs are received by the device 200 and are always routed to the master node, for example by the interface 202, regardless the change of the processing node acting as the master node.

The assignment of the floating public IP address FPIP from one of the processing nodes 206ᵢ to another one of the processing nodes 206₁-206₅ may be done with appropriate network infrastructure APIs.

For example, in the example shown in FUGURES 2-3, the PN 206₄ is chosen as the master node, at the start of the device 200, as shown in FIGURE 2. The floating IP address FPIP is assigned to the processing node 206₄, for example by inscription in the API used in the device 200, or in the cluster 208, or in the interface 202.

When the PN 206₄ acting as the master node is down, or unavailable, the remaining processing nodes 206₁-206₃ and 206₅ elect a new master node among the remaining available processing nodes 206₁-206₃ and 206₅. For example, the processing node 206₁ is elected to be the new master node, as shown in FIGURE 3. Using the network level API calls that the network supports, the FPIP, previously assigned to the processing node 206₄, is assigned to the processing node 206₁ elected as the new master node. The PN 206₄ is unavailable and does not participate in the election of the new master node, nor in the log processing. The log sources 102 continue sending logs to the floating public IP address FPIP, now assigned to the PN 206₁ acting as the master node.

At least one, and in particular each, of the processing nodes 206ᵢ may be a physical machine or a virtual machine. For example, at least one, and in particular each, of the processing nodes 206ᵢ may be a computer, a processor, a chip, gateway, etc.

At least one, in particular each, processing node 202ᵢ is configured to compress the logs, encrypt the logs and send the compressed encrypted logs to the cloud system 114, through the interface 204.

The processing nodes 206ᵢ may process logs simultaneously or in turn.

Of course, at least one, and in particular each, processing node 206ᵢ may be configured to carry out another function, or processing, as those mentioned above.

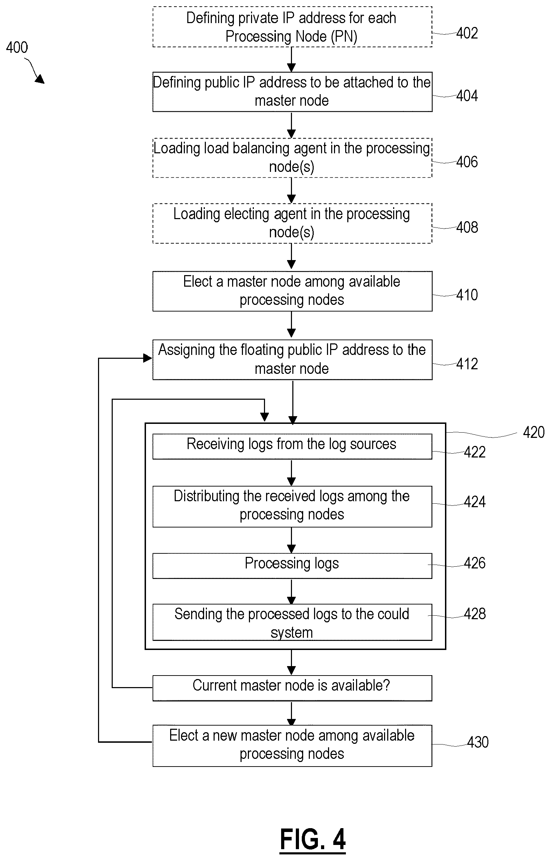

FIGURE 4 is a diagrammatic representation of a non-limitative example of a method according to the present invention.

The method 400, shown in FIGURE 4, may be used in any kind of edge-network for collecting logs, and more particularly in the edge-network 100 of FIGURE 1.

The method 400 may be carried out with a device according to the invention, and more particularly with the device 200 of FIGURES 2-3.

The method 400 may comprise an optional step 402 for defining a private IP address for each of the processing node of the device, i.e. for the PN 206₁-206₅. The private IP addresses are used by the PNs to communicate with each other, and more particularly by the master node to communicate with the other PNs, especially for processing load balancing. This step 402 is optional because the private IP addresses may be defined in the processing nodes beforehand.

The method comprises a step 404 for defining a floating public IP address FPIP that will be attached to the master node. This floating public IP address FPIP is communicated to each log source so that each log source sends the log(s) to said address.

The method 400 further may comprise an optional step 406 for loading in at least one, and especially in each, processing node a load balancing agent, such as the Apache Nifi agent. This step 406 is also optional because the load balancing agent(s) may be loaded in the processing nodes beforehand.

The method 400 may further comprise an optional step 408 for loading in at least one, and especially in each, processing node an electing, or a voting, agent, for electing a master node among the processing nodes of the device. This step 408 is also optional because the electing agent(s) may be loaded in the processing nodes beforehand.

The method 400 further comprises a step 410 for electing a master node. The election of the master node may be done as described above, for example according to an election algorithm.

At a step 412, the floating public IP address is assigned to the processing node elected as the master node, for example by assigning said floating public IP address to said node in a device's API.

After the master node is elected and the floating public IP address attached to the master node is assigned to the processing node acting as master node, the method 400 comprises a processing phase 420.

The processing phase comprises a step 422 during which the master node receives logs from log sources.

The received logs are distributed, by the master node, among all the processing nodes of the device, at a step 424.

Each processing node processes the logs it received from the master node at a step 426 of the processing phase 412. The master node may also process part of the logs so that the logs are balanced among all of the available processing nodes, including the master node. For example, the logs may be compressed, and/or encrypted.

At a step 428, each processing node sends the logs it processed to the cloud system.

The processing phase 412 is repeated as long as the current master node is available, and as long as logs are received.

If the current master node is down or unavailable, the system comprises a step 430 electing a new master node among the available processing nodes, in a similar way as the step 410.

Once the new master node is elected, the process resumes to step 412 where the floating public IP address is assigned to the processing node elected as the new master node.

The method then continues to the processing phase 420 with the new master node, and so on.

Of course the method according to the invention is not limited to the example described above in connection with the FIGURE 4. For example, steps 402-410 in a different order than the one shown in FIGURE 4. Moreover, steps 422-428 are shown as discrete steps. In other embodiments, each of the steps 422-428 may be a continuous step carried out continuously throughout the processing step. In some embodiments, step 430 may be carried out on demand, or at a given frequency, instead of or in addition to, what has been described above.

Of course, the invention is not limited to the examples detailed above. For example, the number of the log sources, the number of the processing nodes, their arrangement, etc. are not limited to the examples described above.

## Claims

1. An edge-based log collecting device (110;200) for collecting logs from several log sources (102₁-102ₘ) located in a remote network, called edge-network, (100) and sending said logs to a cloud-based system (112) distant from said edge-network (100), said device (110;200) being located in said edge-network (100), said device (110;200) comprising:
- at least one interface (202) for receiving logs from said log sources (102₁-102ₘ),
- at least one interface (204) for sending logs to said distant system (112), and
- several processing nodes (206₁-206₅) for processing the received logs and sending them to said system (112);
**characterized in that** said processing nodes (206₁-206₅) are configured to elect, according to a predetermined election algorithm, one of said processing nodes (206₁-206₅) as a master node configured for:
- receiving the logs from all log sources (102₁-102ₘ) of the local network, and
- sharing said logs with the other processing nodes (206₁-206₅).

2. The device (110;200) according to the preceding claim, **characterized in that** the processing nodes (206₁-206₅) are configured to switch the master node according to the election algorithm.

3. The device (110;200) according to any one of the preceding claims, **characterized in that**, when the current master node (206₄) is unavailable, the processing nodes (206₁-206₃,206₅) are configured to elect one (206₁) of the remaining available processing nodes (206₁-206₃,206₅) as the master node, according to the election algorithm.

4. The device (110;200) according to any one of the preceding claims, **characterized in that** said device (110;200) comprises an odd number of processing nodes (206₁-206₅) equal to, or greater than, three.

5. The device (110;200) according to any one of the preceding claim, **characterized in that** a floating public IP address is associated to the master node (206₄;206₁) so that when a processing node is elected as the master node said public IP address is assigned to said processing node.

6. The device (110;200) according to any one of the preceding claims, **characterized in that** the processing nodes (206₁-206₅), including the master node, are organized as a cluster (208) in which a private IP address is assigned to each of said processing node (206₁-206₅), said private IP addresses being used by said processing nodes (206₁-206₅) to communicate with each other.

7. A method (400) for collecting logs from several log sources (102₁-102ₘ) located in a remote network, called edge-network, (100) and sending said logs to a cloud-based system (112) distant from said edge-network (100), with a log collecting device (100;200) located in said edge-network (100), said device (110;200) comprising:
- at least one interface (202) for receiving logs from said log sources(102₁-102ₘ),
- at least one interface (204) for sending logs to said distant system (112), and
- several processing nodes (206₁-206₅) for processing the received logs and sending them to said system (112);
**characterized in that** said method (400) comprises a step (410;430) of electing, by said processing nodes (206₁-206₅), according to an election algorithm, one of said processing nodes (206₁-206₅) as a master node, said master node being configured for:
- receiving the logs from said log sources (102₁-102ₘ), and
- sharing said logs with the other processing nodes (206₁-206₅).

8. The method (400) according to the preceding claim, **characterized in that** said method (400) further comprises at least one iteration of a step (430) for switching the master node from one of the processing nodes (206₁-206₅) to another one of the processing nodes (206₁-206₅).

9. The method (400) according to any one of the preceding method claims, **characterized in that** the switching step (430) is carried out when the current master node (206₄) is unavailable, the new master node (206₁) being elected among the remaining available processing nodes (206₁-206₃,206₅).

10. The method (400) according to any of the preceding method claim, **characterized in that** it comprises a step (404) for assigning a floating public IP address to the master node and used by the log sources (102₁-102ₘ) to communicate with said master node, and **in that** when a processing node is elected as master node said method comprising a step (412) for assigning said floating public IP address to said processing node.

11. The method (400) according to any one of the claims 7 to 10, **characterized in that** the processing nodes (206₁-206₅), including the master node, are organized as a cluster (208), said method (400) comprising a step (402) for assigning a private IP address to each of said processing node (206₁-206₅), said private IP addresses being used by said processing nodes (206₁-206₅) to communicate with each other.

12. Computer program comprising instructions which, when executed by a computer, cause the computer to carry out the steps of the method (400) according to any one of the claims 7 to 11.

13. Edge-network (100) comprising several log sources (102₁-102ₘ), said network (100) also comprising:
- a device (110;200) according to anyone of the claims 1 to 6; or
- means configured for carrying out the steps of the method (400) according to any one of the claims 7 to 11;
for collecting logs from said log sources (102₁-102ₘ).

## Patentansprüche

1. Edge-basierte Protokollsammelvorrichtung (110;200) zum Sammeln von Protokollen von mehreren Protokollquellen (102₁-102ₘ), die sich in einem entfernten Netzwerk, Edge-Netzwerk genannt, (100) befinden, und zum Senden der Protokolle an ein Cloud-basiertes System (112), das von dem Edge-Netzwerk (100) entfernt ist, wobei sich die Vorrichtung (110;200) in dem Edge-Netzwerk (100) befindet, die Vorrichtung (110;200) umfassend:
- mindestens eine Schnittstelle (202) zum Empfangen von Protokollen von den Protokollquellen (102₁-102ₘ),
- mindestens eine Schnittstelle (204) zum Senden von Protokollen an das entfernte System (112) und
- mehrere Verarbeitungsknoten (206₁-206₅) zum Verarbeiten der empfangenen Protokolle und Senden derselben an das System (112);
**dadurch gekennzeichnet, dass** die Verarbeitungsknoten (206₁-206₅) konfiguriert sind, um gemäß einem vorbestimmten Wahlalgorithmus einen der Verarbeitungsknoten (206₁-206₅) als einen Master-Knoten zu wählen, der konfiguriert ist zum:
- Empfangen der Protokolle von allen Protokollquellen (102₁-102ₘ) des lokalen Netzwerks und
- Teilen der Protokolle mit den anderen Verarbeitungsknoten (206₁-206₅).

2. Vorrichtung (110;200) nach dem vorstehenden Anspruch, **dadurch gekennzeichnet, dass** die Verarbeitungsknoten (206₁-206₅) konfiguriert sind, um den Master-Knoten gemäß dem Wahlalgorithmus zu wechseln.

3. Vorrichtung (110;200) nach einem der vorstehenden Ansprüche, **dadurch gekennzeichnet, dass**, wenn der aktuelle Master-Knoten (206₄) nicht verfügbar ist, die Verarbeitungsknoten (206₁-206₃,206₅) konfiguriert sind, um gemäß dem Wahlalgorithmus einen (206₁) der verbleibenden verfügbaren Verarbeitungsknoten (206₁-206₃,206₅) als den Master-Knoten zu wählen.

4. Vorrichtung (110;200) nach einem der vorstehenden Ansprüche, **dadurch gekennzeichnet, dass** die Vorrichtung (110;200) eine ungerade Anzahl von Verarbeitungsknoten (206₁-206₅) umfasst, die gleich oder größer als drei ist.

5. Vorrichtung (110;200) nach einem der vorstehenden Ansprüche, **dadurch gekennzeichnet, dass** dem Master-Knoten (206₄; 206₁) eine öffentliche Floating-IP-Adresse zugeordnet ist, sodass, wenn ein Verarbeitungsknoten als der Master-Knoten gewählt wird, die öffentliche IP-Adresse dem Verarbeitungsknoten zugewiesen wird.

6. Vorrichtung (110;200) nach einem der vorstehenden Ansprüche, **dadurch gekennzeichnet, dass** die Verarbeitungsknoten (206₁-206₅), einschließlich des Master-Knotens, als ein Cluster (208) organisiert sind, in dem jedem der Verarbeitungsknoten (206₁-206₅) eine private IP-Adresse zugewiesen ist, wobei die privaten IP-Adressen von den Verarbeitungsknoten (206₁-206₅) verwendet werden, um miteinander zu kommunizieren.

7. Verfahren (400) zum Sammeln von Protokollen aus mehreren Protokollquellen (102₁-102ₘ), die sich in einem entfernten Netzwerk, Edge-Netzwerk genannt, (100) befinden, und zum Senden der Protokolle an ein Cloud-basiertes System (112), das von dem Edge-Netzwerk (100) entfernt ist, mit einer Protokollsammelvorrichtung (100;200), die sich in dem Edge-Netzwerk (100) befindet, die Vorrichtung (110;200) umfassend:
- mindestens eine Schnittstelle (202) zum Empfangen von Protokollen von den Protokollquellen (102₁-102ₘ),
- mindestens eine Schnittstelle (204) zum Senden von Protokollen an das entfernte System (112) und
- mehrere Verarbeitungsknoten (206₁-206₅) zum Verarbeiten der empfangenen Protokolle und Senden derselben an das System (112);
**dadurch gekennzeichnet, dass** das Verfahren (400) einen Schritt (410;430) des Wählens durch die Verarbeitungsknoten (206₁-206₅) gemäß einem Wahlalgorithmus eines der Verarbeitungsknoten (206₁-206₅) als einen Master-Knoten umfasst, wobei der Master-Knoten konfiguriert ist zum:
- Empfangen der Protokolle von den Protokollquellen (102₁-102ₘ) und
- Teilen der Protokolle mit den anderen Verarbeitungsknoten (206₁-206₅).

8. Verfahren (400) nach dem vorstehenden Anspruch, **dadurch gekennzeichnet, dass** das Verfahren (400) ferner mindestens eine Iteration eines Schritts (430) zum Umschalten des Master-Knotens von einem der Verarbeitungsknoten (206₁-206₅) zu einem anderen der Verarbeitungsknoten (206₁-206₅) umfasst.

9. Verfahren (400) nach einem der vorstehenden Verfahrensansprüche, **dadurch gekennzeichnet, dass** der Umschaltschritt (430) ausgeführt wird, wenn der aktuelle Master-Knoten (206₄) nicht verfügbar ist, wobei der neue Master-Knoten (206₁) aus den verbleibenden verfügbaren Verarbeitungsknoten gewählt wird (206₁-206₃,206₅).

10. Verfahren (400) nach einem der vorstehenden Verfahrensansprüche, **dadurch gekennzeichnet, dass** es einen Schritt (404) zum Zuweisen einer öffentlichen Floating-IP-Adresse an den Master-Knoten umfasst, und die von den Protokollquellen (102₁-102ₘ) verwendet wird, um mit dem Master-Knoten zu kommunizieren, und dadurch, dass, wenn ein Verarbeitungsknoten als Master-Knoten gewählt wird, das Verfahren umfassend einen Schritt (412) zum Zuweisen der öffentlichen Floating-IP-Adresse an den Verarbeitungsknoten.

11. Verfahren (400) nach einem der Ansprüche 7 bis 10, **dadurch gekennzeichnet, dass** die Verarbeitungsknoten (206₁-206₅), einschließlich des Master-Knotens, als ein Cluster (208) organisiert sind, das Verfahren (400) umfassend einen Schritt (402) zum Zuweisen einer privaten IP-Adresse an jeden der Verarbeitungsknoten (206₁-206₅), wobei die privaten IP-Adressen von den Verarbeitungsknoten (206₁-206₅) verwendet werden, um miteinander zu kommunizieren.

12. Computerprogramm umfassend Anweisungen, die, wenn sie durch einem Computer ausgeführt werden, den Computer veranlassen, die Schritte des Verfahrens (400) nach einem der Ansprüche 7 bis 11 durchzuführen.

13. Edge-Netzwerk (100), umfassend mehrere Protokollquellen (102₁-102ₘ), das Netzwerk (100) ferner umfassend:
- eine Vorrichtung (110;200) nach einem der Ansprüche 1 bis 6; oder
- Mittel, die zum Vornehmen der Schritte des Verfahrens (400) nach einem der Ansprüche 7 bis 11 konfiguriert sind;
zum Sammeln von Protokollen von den Protokollquellen (102₁-102ₘ).

## Revendications

1. Dispositif de collecte de journaux en périphérie (110 ;200) permettant de collecter des journaux auprès de plusieurs sources de journaux (102₁-102ₘ) localisées dans un réseau distant, appelé réseau périphérique (100) et d'envoyer lesdits journaux à un système en nuage (112) distant dudit réseau périphérique (100), ledit dispositif (110 ;200) étant localisé dans ledit réseau périphérique (100), ledit dispositif (110 ;200) comprenant :
- au moins une interface (202) permettant de recevoir des journaux en provenance desdites sources de journaux (102₁-102ₘ),
- au moins une interface (204) permettant d'envoyer des journaux audit système distant (112), et
- plusieurs nœuds de traitement (206₁-206₅) permettant de traiter les journaux reçus et de les envoyer audit système (112) ;
**caractérisé en ce que** lesdits nœuds de traitement (206₁-206₅) sont configurés pour élire, selon un algorithme d'élection prédéterminé, l'un desdits nœuds de traitement (206₁-206₅) en tant que nœud maître configuré pour :
- la réception des journaux en provenance de toutes les sources de journaux (102₁-102ₘ) du réseau local, et
- le partage desdits journaux avec les autres nœuds de traitement (206₁-206₅).

2. Dispositif (110 ;200) selon la revendication précédente, **caractérisé en ce que** les nœuds de traitement (206₁-206₅) sont configurés pour commuter le nœud maître selon l'algorithme d'élection.

3. Dispositif (110 ;200) selon l'une quelconque des revendications précédentes, **caractérisé en ce que**, lorsque le nœud maître actuel (206₄) est indisponible, les nœuds de traitement (206₁-206₃, 206₅) sont configurés pour élire l'un (206₁) des nœuds de traitement (206₁-206₃, 206₅) disponibles restants en guise de nœud maître, selon l'algorithme d'élection.

4. Dispositif (110 ;200) selon l'une quelconque des revendications précédentes, **caractérisé en ce que** ledit dispositif (110 ;200) comprend un nombre impair de nœuds de traitement (206₁-206₅) égal ou supérieur à trois.

5. Dispositif (110 ;200) selon l'une quelconque des revendications précédentes, **caractérisé en ce qu'**une adresse IP publique flottante est associée au nœud maître (206₄ ;206₁) de sorte que lorsqu'un nœud de traitement est élu en guise de nœud maître ladite adresse IP publique est attribuée audit nœud de traitement.

6. Dispositif (110 ;200) selon l'une quelconque des revendications précédentes, **caractérisé en ce que** les nœuds de traitement (206₁-206₅), y compris le nœud maître, sont organisés en tant que grappe (208) dans laquelle une adresse IP privée est attribuée à chacun desdits nœuds de traitement (206₁-206₅), ladite adresse IP privée étant utilisée par lesdits nœuds de traitement (206₁-206₅) pour communiquer les uns avec les autres.

7. Procédé (400) permettant de collecter des journaux auprès de plusieurs sources de journaux (102₁-102ₘ) localisées dans un réseau distant, appelé réseau périphérique, (100) et d'envoyer lesdits journaux à un système en nuage (112) distant dudit réseau périphérique (100), avec un dispositif de collecte de journaux (100 ;200) localisé dans ledit réseau périphérique (100), ledit dispositif (110 ;200) comprenant :
- au moins une interface (202) permettant de recevoir des journaux en provenance desdites sources de journaux (102₁-102ₘ),
- au moins une interface (204) permettant d'envoyer des journaux audit système distant (112), et
- plusieurs nœuds de traitement (206₁-206₅) permettant de traiter les journaux reçus et de les envoyer audit système (112) ;
**caractérisé en ce que** ledit procédé (400) comprend une étape (410 ;430) consistant à élire, par lesdits nœuds de traitement (206₁-206₅), selon un algorithme d'élection, l'un desdits nœuds de traitement (206₁-206₅) en tant que nœud maître, ledit nœud maître étant configuré pour :
- la réception des journaux en provenance desdites sources de journaux (102₁-102ₘ), et
- le partage desdits journaux avec les autres nœuds de traitement (206₁-206₅).

8. Procédé (400) selon la revendication précédente, **caractérisé en ce que** ledit procédé (400) comprend en outre au moins une itération d'une étape (430) permettant de commuter le nœud maître de l'un des nœuds de traitement (206₁-206₅) à un autre des nœuds de traitement (206₁-206₅).

9. Procédé (400) selon l'une quelconque des revendications de procédé précédentes, **caractérisé en ce que** l'étape de commutation (430) est effectuée lorsque le nœud maître actuel (206₄) est indisponible, le nouveau nœud maître (206₁) étant élu parmi les nœuds de traitement disponibles restants (206₁-206₃,206₅).

10. Procédé (400) selon l'une quelconque des revendications de procédé qui précèdent, **caractérisé en ce qu'**il comprend une étape (404) permettant d'attribuer une adresse IP publique flottante au nœud maître et utilisée par les sources de journaux (102₁-102ₘ) pour communiquer avec ledit nœud maître, et **en ce que** lorsqu'un nœud de traitement est élu en tant que nœud maître ledit procédé comprenant une étape (412) permettant d'attribuer ladite adresse IP publique flottante audit nœud de traitement.

11. Procédé (400) selon l'une quelconque des revendications 7 à 10, **caractérisé en ce que** les nœuds de traitement (206₁-206₅), y compris le nœud maître, sont organisés en tant que grappe (208), ledit procédé (400) comprenant une étape (402) permettant d'attribuer une adresse IP privée à chacun desdits nœuds de traitement (206₁-206₅), ladite adresse IP privée étant utilisée par lesdits nœuds de traitement (206₁-206₅) pour communiquer les uns avec les autres.

12. Programme d'ordinateur comprenant des instructions qui, lorsqu'elles sont exécutées par un ordinateur, amènent l'ordinateur à effectuer les étapes du procédé (400) selon l'une quelconque des revendications 7 à 11.

13. Réseau périphérique (100) comprenant plusieurs sources de journaux (102₁-102ₘ), ledit réseau (100) comprenant également :
- un dispositif (110 ;200) selon l'une quelconque des revendications 1 à 6 ; ou
- un moyen configuré pour la réalisation des étapes du procédé (400) selon l'une quelconque des revendications 7 à 11 ;
pour la collecte de journaux auprès desdites sources de journaux (102₁-102ₘ).
